# EUROPÄISCHE PATENTSCHRIFT

(11) **EP 1 921 192 B1**
(45) Veröffentlichungstag und Bekanntmachung des Hinweises auf die Patenterteilung: **07.04.2010**
(21) Anmeldenummer: 07021755.9
(22) Anmeldetag: 09.11.2007
(51) Int. Cl.: D04H 13/00, B32B 7/08, B32B 27/12

(54) **Unter Verwendung von Vliesstoffen hergestellte, mehrschichtige, querelastische Materialbahn**
Multi-layer, transverse elastic material web made by using a non-woven
Bande de matériau élastique transversalement, à plusieurs couches, fabriquée en utilisant des tissus non tissés

(30) Priorität: 13.11.2006 DE 102006053649; 15.12.2006 DE 102006059266
(43) Veröffentlichungstag der Anmeldung: 14.05.2008
(73) Patentinhaber: RKW SE, 67227 Frankenthal (DE)
(72) Erfinder: Epping, Reinhard, 48599 Gronau (DE)
(74) Vertreter: Wagner, Jutta

(56) Entgegenhaltungen:
- EP-A- 1 066 957
- EP-A- 1 462 558
- WO-A-03/006233
- GB-A- 2 341 578
- US-A- 6 028 017
- US-A- 6 074 966

## Beschreibung

Die vorliegende Erfindung betrifft eine mehrschichtige elastische Materialbahn, die unter Verwendung einer Kunststofffolie hergestellt wird, die mit einem Vliesstoff verbunden ist.

Eine solche Materialbahn ist z. B. aus DE 103 04 370 bekannt. Das dort beschriebene Material besteht aus einer elastischen Trägerfolie (Elastomere), welche beidseitig mit einem glatt aufliegenden Vlies kaschiert ist, wobei gitterförmige Schweißpunkte, welche den gesamten Schichtaufbau durchgreifen, die Schichten zusammenhalten. Das zum Verschweißen dienende Material besteht aus einem Teil des Vliesmaterials bzw. der zentralen Folie. Der einzelne Schweißpunkt durchbricht (locht) die zentrale Folie und verbindet obere und untere Vliesbahnen miteinander. Vorzugsweise ist der Schweißpunkt ringförmig ausgebildet, wodurch das Laminat atmungsaktiv ist. Gegebenenfalls ist bekannterweise diese Ringmitte durch eine dünne Folienhaut verschlossen.

Dieses Material weist eine Dehnbarkeit von bis zu 200 % auf, wobei es möglich ist, alle drei Bahnen parallel z. B. in eine Schweißverbindungsvorrichtung einzubringen, wo die Bahnen zwischen zwei Walzen durchgeführt werden, die über erhitzte Schweißstacheln die Materialbahn durchgreifen und die zentrale Trägerfolie soweit anschmelzen, dass diese sich punktuell mit den Vliesbahnen verbindet. Durch Verwendung von entsprechenden Schweißstacheln auf beiden Walzen, welche sich jeweils in der Mitte der Trägerfolie treffen, werden Ringschweißpunkte erzeugt, die durch einen dünnen Rest der Folie noch gegen Flüssigkeitsdurchtritt verschlossen sind, jedoch einen Gasdurchtritt weitgehend zulassen.

Die Vliesmaterialien werden hergestellt, indem man geeignete Polymere, vorzugsweise Propylen-Homo-Polymere mit einem Schmelzindex MFI (230°/2,16 kg) von 8-12 g pro /10 min., über Spinndüsen extrudiert, wobei Faserflor gebildet wird, in dem die Menge der querorientierten Fasern zur Menge der längsorientierten Fasern im Verhältnis von 20-40 zu 80-60, vorzugsweise 30 zu 70 verteilt ist. Dieses Verhältnis wird dadurch erreicht, dass eine entsprechend ausgebildete, an sich bekannte Wirrwalze einen hohen Anteil an Fasern aus der Längsorientierung in die Querlage bringt. Der so hergestellte, noch nicht verfestigte Faserflor wird über eine Breitstreckeinrichtung in mehreren Stufen in Querrichtung gestreckt, wodurch sich die Fasern zusätzlich in Querrichtung orientieren und anschließend in einer Schweißvorrichtung z. B. einer Kalander-Schweißvorrichtung verfestigt, in dem die Vliesfasern in regelmäßigen Abständen miteinander punktförmig verschweißt werden. Die Vliese (Kardenvliese) bestehen aus Polypropylenfasern und/oder aus Mischungen verschiedener Fasertypen wie z.B. aus Polypropylen/Viskose, Polypropylen /Polyamid, Polypropylen /Polyester etc.

Die so erhaltenen Vliese weisen ein Flächengewicht von etwa 15 - 50 g pro m², vorzugsweise etwa 20-30 g pro m² auf und sind durch die Art und Weise der Herstellung sehr weich und verformbar. Die Reißkraft MD/CD beträgt etwa 4 zu 1, die Dehnung MD/CD 1 zu 2,5 (MD=Machine Direction, CD=Cross Direction).

Die als Träger dienende elastische Folie wird üblicherweise in Stärken von 20 - 150 µm eingesetzt und besteht vorzugsweise aus thermoplastischen Polyolefinen, Elastomeren und deren Kombinationen. Durch diese Kombinationen können die erforderlichen elastischen Eigenschaften individuell eingestellt werden.

Nachteilig an dieser Vorgehensweise ist, dass die Materialbahn in einem separaten Verfahrensschritt durch Recken "aktiviert" werden muss, um ihre Dehnbarkeit zu erhalten, da die Fasern mit der Folie einen relativ starren Verbund bilden, der erst beim Aktivieren aufbricht.

Nachteilig ist ferner, dass das Recken auch eine Materialschädigung mit sich bringt.

Ferner ist aus EP 1 066 957 ein Verfahren zur Herstellung elastisch dehnbarer Verbunde bekannt, bei dem ein elastisch dehnbares zweites Flächengebilde auf ein erstes Flächengebilde, welches dehnbare Fasern umfasst, aufgelegt und punktweise mit diesem zu einem flächigen Verbund vereinigt wird. Der Verbund wird dann unter plastischer Verformung der Fasern gedehnt und zieht sich elastisch zusammen, wobei der elastisch dehnbare Verbund erhalten wird.

In US 6,074,966 wird ein Verbund aus Fasern und einer geschäumten Lage beschrieben, wobei die Fasern mittels Wasserstrahlverfahren mit der geschäumten Lage verbunden werden. Die geschäumte Lage ist für die elastischen Eigenschaften und die Stabilität des Verbundes verantwortlich. Ähnliche Verbunde sind aus US 6,028,017 bekannt, dort werden Vliese mit geschäumten Lagen zu einem Verbund genadelt.

GB 2 341 578 offenbart Dachunterspannbahnen, welche Vliese umfassen, die mit Wasserstrahlen, Kleberlaminierung, Ultraschalllaminierung oder Thermobonding verfestigt sein können, wobei Thermobonding bevorzugt ist. Diese Verbunde sind nicht elastisch.

Aus WO 03/006233 sind mit elastischen Fäden genähte flächige Materialien bekannt, welche auch mit einem Vlies verbunden sein können. Nach dem Nähen zieht sich der Faden zusammen und verleiht dem flächigen Material damit besondere haptische, visuelle und funktionelle Eigenschaften. Das Material ist nicht wasserdicht.

Die vorliegende Erfindung hat sich daher die Aufgabe gestellt, ein Verfahren zu finden, bei welchem eine solche Aktivierung entfallen kann.

Überraschend wurde nun gefunden, dass Vliesstoffe; welche in einer bestimmten Weise mittels Wasserstrahlen verfestigt werden, eine hohe Dehnbarkeit in Querrichtung aufweisen und damit bei Laminierung mit elastischen Folien die gewünschten Laminate ergeben, welche nicht mehr aktiviert werden müssen. Die Lösung dieser Aufgabe gelingt somit durch Schaffung mehrschichtiger elastischer Materialbahnen aus Vliesstofflagen und Polymerfolien, wobei die Vliesstofflagen nach deren Extrudieren und vor dem Verbinden mit der Polymerfolie mit Hilfe von Wasserstrahlen verfestigt sind, so dass sie leicht in Querrichtung dehnbar sind. Vorteilhafte Ausgestaltungen finden sich in den Unteransprüchen.

Überraschenderweise besitzen die erfindungsgemäß hergestellten Laminate von Anfang an eine hohe Elastizität, so dass der bisher erforderliche Aktivierungsschritt entfallen kann.

Die Wasserstrahlverfestigung von Vliesstoffen kann z. B. gemäß US 6,321,425 B1 (für Kardenvliese) oder z.B. gemäß WO 03/087455 A1 erfolgen, wobei dort das Hauptaugenmerk auf höheren Festigkeiten, höheren Volumina und einer höheren Weichheit liegt.

Demgegenüber wird im vorliegenden Fall ein Faserflor (Gelege aus Stapelfasern oder Endlosfasern) derart durch die Wasserstrahlen verfestigt, dass die Dehnbarkeit des Vlieses einen atypischen Verlauf in einem Kraft/Dehnungsdiagramm einnimmt. Um einem Dehnungsanstieg von 0% auf 100% zu erreichen wird eine Kraft von ≤ 1 N benötigt. Eine Steigerung der Dehnung um 50% auf 150 % erfordert eine Verdoppelung des Kraftaufwandes von 1 N auf 2N. Die Dehnung auf 200 % der ursprünglichen Länge verlangt einen Kraftaufwand von > 4N.

Dieses Vlies in Kombination mit einer elastischen Folie, wie bereits in der o. g. DE 103 04 370 B1 beschrieben und den genannten Verfahren zu deren Herstellung erlauben die Herstellung eines querelastischen Materials, welches nicht mehr durch eine Aktivierungseinheit gefahren werden muss, und dadurch nicht mehr belastet oder geschädigt wird.

Durch den Einsatz einer Ultraschallschweißeinheit können die Vlieslagen für ein dreilagiges Produkt optimal miteinander verbunden werden. In diesem Fall werden nur geringfügig zusätzliche Bondierpunkte hinzugefügt, die die beschriebenen Eigenschaften aber nicht wesentlich verändern. In diesem Fall wird die Folie bevorzugt auf beiden Seiten mit Vlies verbunden, durch die Ultraschallschweißung werden dabei die beiden Vliese miteinander verbunden und binden so auch die Folie ein.

Das Vlies kann auch durch Kleber (Hotmeltkleber) mit der elastischen Folie verbunden werden. Durch die Art und Weise wie der Kleber aufgetragen wird (z.B. in Streifen, punktförmig, in Spiralen, usw.) kann die Kontaktfläche (ähnlich den Bondierpunkten) festgelegt werden, wodurch sich auch in diesem Fall die beschriebenen Eigenschaften nur geringfügig verändern. Hier ist auch eine Ausführung mit einem Vlies nur auf einer Seite möglich, bevorzugt ist die Ausführung mit Vliesstoff auf beiden Seiten der Folie.

Bei einer Extrusionslaminierung, bei dem die zwei wasserstrahlverfestigten Vliesstoffe dem elastischen Film direkt nach dessen Bildung, also noch in der heißen Schmelze, zugeführt werden, wird die Kontaktfläche zwischen Vlies und Film durch die Spalteinstellung der, als Niprollen ausgeführten, Kühlwalzen reguliert. Die Kontaktfläche ist hierbei deutlich höher als bei den beiden anderen Verfahren, das Vlies behält allerdings seine Eigenschaften, so das hier ein identischen Kurvenverlauf in einem Kraft-Dehnungsdiagramm auf einem insgesamt etwas höheren Niveau erreicht wird.

Nachfolgend wird als Beispiel der Kurvenverlauf des Kraft-/Dehnungsdiagramms des neuartigen Materials dargestellt. Verwendet wurden zwei Lagen Kardenvlies (Stapelfaservlies mit einem Gewicht von 35 g/m²), die Mittels Wasserstrahltechnologie verfestigt wurden und einer Lage einer elastischen polymeren Folie (in diesem Beispiel mit einer Schichtdicke von 60 µm, hergestellt durch die RKW AG Werk Wasserburg).

Materialien zur Herstellung elastischer Folien sind dem Fachmann bekannt. Elastische Polymere auf Basis von Polyolefinen wie Polyethylen und Polypropylen, Styrol-Butadien-Styrol (SBS), Styrol-Ethylen-Butylen-Styrol (SEBS), Styrol-Isopren-Styrol (SIS) und/oder Mischungen (Kompounds) daraus werden häufig eingesetzt. Die elastische Folie kann z.B. auch aus so genannten elastischen Thermoplasten auf Basis von Metallocen-katalysierten Polyolefinen (Polyproylen (PP), low density Polyethylen (LDPE), linear low density Polyethylen (LLDPE) oder Polyurethanen bestehen. Es ist weiterhin denkbar, Naturkautschuk zu verwenden, üblicherweise wird davon jedoch wegen möglicher allergischer Reaktion abgesehen.

Besonders bevorzugt sind ein oder mehrlagige Folien, die aus elastischen Polyolefinen (z.B. der Typenreihe Vistamaxx de Fa. ExxonMobile oder der Typenreihe Affinity der Fa. DOW) und/oder Mischungen aus SBS und/oder SEBS Kompounds (z.B. aus der Typenreihe Kraton der Fa. Kraton Polymers oder der Typenreihe Styroflex der Fa. BASF AG) bestehen. Einige Hersteller bieten fertige, auf den Anforderungen des Kunden abgestimmte elastische Compounds an. (z.B. Fa. Kraiburg TPE GmbH, Fa. Elastoteknik AB oder Fa. Wittemburg B.V.)

Der Kurvenverlauf der Hysterese dieses Laminates zeigt bei einer Dehnung von 100 % einen Kraftaufwand von < 5N, bei 150 % eine Kraft von < 8N, und bei einer Dehnung von 200 % einen Kraftaufwand von < 12 N.

Die Verbindung der Lagen wurde unter Anwendung von Ultraschalltechnologie vorgenommen, wie sie z. B. in der DE 103 51 831.2-16 beschrieben wurde.

Der obere Kurvenverlauf 1 zeigt im Kraft-/Dehnungsdiagramm das Verhalten des neuartigen Materials bei seiner ersten Belastung. Der Prüfling wurde dabei in Querrichtung auf 200 % seiner ursprünglichen Länge gedehnt, wobei ein Kraftaufwand von weniger als 12 Newton aufgewendet werden musste. Unter dieser Belastung wurde das Material für 30 Sekunden gehalten, bevor das Material wieder entlastet wurde. Diese Entlastungskurve ist mit der Nummer 2 gekennzeichnet. Nach weiteren 60 Sekunden wurde der gleiche Prüfling nochmals auf 200 % seiner ursprünglichen Länge gedehnt, wobei dann nur noch ein Kraftaufwand von weniger als 9 Newton benötigt wurde, und der Kurvenverlauf deutlich flacher verläuft als bei der ersten Belastung. Dieses ist in der Kurve 3 dargestellt. Auch nach der zweiten Belastung wurde der Prüfling für 30 Sekunden gehalten, bevor das Material wieder entlastet wurde. Diese Entlastungskurve ist mit der Nummer 4 gekennzeichnet.

Diese Werte können bei anderen Laminaten nur durch einen Aktivierungsprozess erreicht werden, der das Laminat in seiner Struktur beschädigt, was wiederum zu Störungen bei der Weiterverarbeitung führen kann.

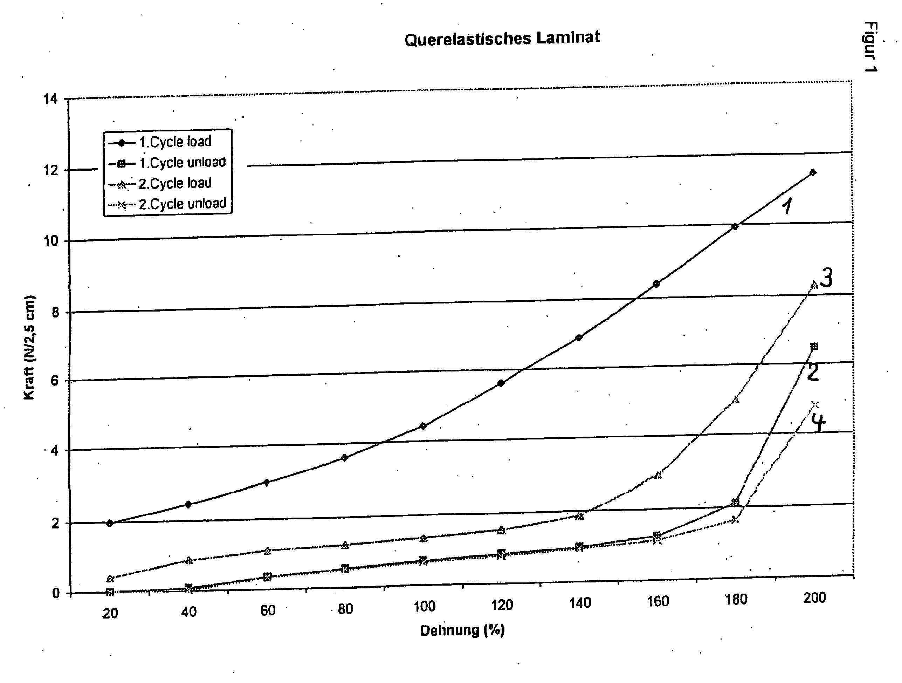

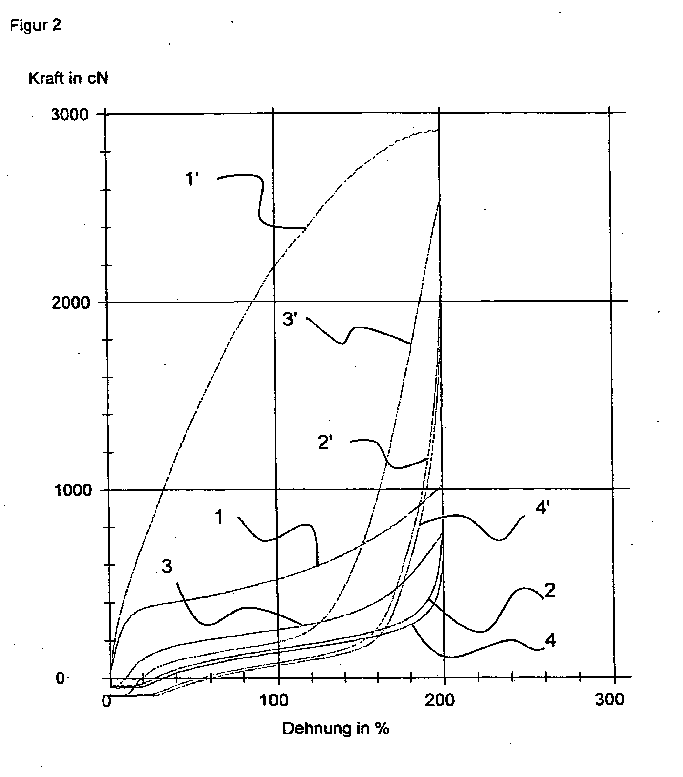

In Figur 2 ist zum Vergleich der Kurvenverlauf einer nach DE 103 51 831 erhaltenen Materialbahn ohne Aktivierung mit dem Verlauf bei der erfindungsgemäßen Materialbahn dargestellt. Es sind wiederum jeweils die erste Dehnung 1 (erfindungsgemäß) bzw. 1' (Vergleich), die erste Entspannung 2 bzw. 2' und die zweite Dehnung 3, 3' und Entspannung 4, 4' gezeigt. Weitere Zyklen würden in ihrem Verlauf den Kurven 3, 3' und 4, 4' entsprechen. Man sieht, dass die erfindungsgemäßen Materialbahnen eine deutlich verbesserte Elastizität aufweisen.

Die erfindungsgemäß hergestellten mehrschichtigen, insbesondere querelastischen Materialbahnen lassen sich mit Vorteil bei der Herstellung von Windeln einsetzen, wo sie z. B. als so genannte "Backears" dienen.

## Patentansprüche

1. Mehrschichtige elastische Materialbahn aus Vliesstofflagen und Polymerfolien, **dadurch gekennzeichnet, dass** die mindestens eine Vliesstofflage nach deren Extrudieren und vor dem Verbinden mit der Polymerfolie mit Hilfe von Wasserstrahlen verfestigt ist, so dass sie leicht in Querrichtung dehnbar ist und die Materialbahn mit einer Kraft von unter 12 N auf eine Länge von 200 % ihrer ursprünglichen Länge in Querrichtung elastisch verformbar ist.

2. Mehrschichtige elastische Materialbahn nach Anspruch 1, **dadurch gekennzeichnet, dass** die Vlieslage(n) aus einem wasserstrahlverfestigtem Kardenvlies besteht(bestehen).

3. Mehrschichtige elastische Materialbahn nach Anspruch 1 oder 2, **dadurch gekennzeichnet, dass** mindestens zwei Vlieslagen vorhanden sind.

4. Mehrschichtige elastische Materialbahn nach Anspruch 1 oder 3, **dadurch gekennzeichnet, dass** die Vlieslage(n) aus einem wasserstrahlverfestigten Spinnvlies besteht(bestehen).

5. Mehrschichtige elastische Materialbahn nach Anspruch 4, **dadurch gekennzeichnet, dass** die Vlieslagen ein Gewicht von 10g/m² bis 50g/m² haben.

6. Mehrschichtige elastische Materialbahn nach Anspruch 1, **dadurch gekennzeichnet, dass** eine Kombination von Vlieslagen gemäß Anspruch 2 und 4 vorliegt.

7. Mehrschichtige elastische Materialbahn nach Anspruch 1, **dadurch gekennzeichnet, dass** die Folie aus einem elastischen Polymer hergestellt wurde.

8. Mehrschichtige elastische Materialbahn nach Anspruch 7, **dadurch gekennzeichnet, dass** die dauerhafte Verformung des Materials nach einer Belastung (Permanent Set) unter 20 % liegt.

9. Mehrschichtige elastische Materialbahn nach Anspruch 1, **dadurch gekennzeichnet, dass** die Bahn atmungsaktiv ist.

10. Mehrschichtige elastische Materialbahn nach Anspruch 1, **dadurch gekennzeichnet, dass** die Bahn nicht atmungsaktiv ist.

11. Mehrschichtige elastische Materialbahn nach Anspruch 1, **dadurch gekennzeichnet, dass** die Materialien mittels einer Ultraschalleinheit miteinander verbunden werden.

12. Mehrschichtige elastische Materialbahn nach Anspruch 1, **dadurch gekennzeichnet, dass** die Materialien mittels eines Klebers, z.B. Hotmelt, miteinander verbunden werden.

13. Mehrschichtige elastische Materialbahn nach Anspruch 1, **dadurch gekennzeichnet, dass** die Vliesstoffe dem Extrusionsprozeß der elastischen Folie zugeführt werden.

## Claims

1. A multi-layer elastic material web consisting of non-woven layers and polymer films, **characterized in that** the at least one non-woven layer is solidified by means of water jets after the extrusion thereof and prior to the connection to the polymer film, so that it can be easily expanded in lateral direction and the material web can be elastically deformed to a length of 200% of its original length in lateral direction by means of a force of below 12 N.

2. The multi-layer elastic material web according to claim 1, **characterized in that** the non-woven layer(s) consists (consist) of a water jet-solidified card web.

3. The multi-layer elastic material web according to claim 1 or 2, **characterized in that** at least two non-woven layers are present.

4. The multi-layer elastic material web according to claim 1 or 3, **characterized in that** the non-woven layer(s) consists (consist) of a water jet-solidified spunbond.

5. The multi-layer elastic material web according to claim 4, **characterized in that** the non-woven layers have a weight of from 10g/m² to 50g/m².

6. The multi-layer elastic material web according to claim 1, **characterized in that** a combination of non-woven layers according to claims 2 and 4 is present.

7. The multi-layer elastic material web according to claim 1, **characterized in that** the film was produced from an elastic polymer.

8. The multi-layer elastic material web according to claim 7, **characterized in that** the permanent deformation of the material after stress (permanent set) lies below 20%.

9. The multi-layer elastic material web according to claim 1, **characterized in that** the web is air permeable.

10. The multi-layer elastic material web according to claim 1, **characterized in that** the web is air impermeable.

11. The multi-layer elastic material web according to claim 1, **characterized in that** the materials are interconnected by means of an ultrasonic unit.

12. The multi-layer elastic material web according to claim 1, **characterized in that** the materials are interconnected by means of an adhesive, e.g. hot-melt.

13. The multi-layer elastic material web according to claim 1, **characterized in that** the non-woven fabrics are fed to the extrusion process of the elastic film.

## Revendications

1. Bande en matériau élastique à plusieurs couches, constituée par des couches en non-tissé et des feuilles polymères, **caractérisée en ce que** ladite au moins une couche en non-tissé est solidifiée après son extrusion et avant l'assemblage avec la feuille polymère à l'aide de jets d'eau, de manière telle qu'elle est facilement extensible dans le sens transversal et la bande de matériau est déformable élastiquement dans le sens transversal avec une force inférieure à 12 N à une longueur représentant 200% de sa longueur initiale.

2. Bande en matériau élastique à plusieurs couches selon la revendication 1, **caractérisée en ce que** la/les couche(s) en non-tissé est/sont constituée(s) par un non-tissé cardé solidifié par des jets d'eau.

3. Bande en matériau élastique à plusieurs couches selon la revendication 1 ou 2, **caractérisée en ce qu'**au moins deux couches de non-tissé sont présentes.

4. Bande en matériau élastique à plusieurs couches selon la revendication 1 ou 3, **caractérisée en ce que** la/les couche(s) en non-tissé est/sont constituée(s) par un tissu filé-lié, solidifié par des jets d'eau.

5. Bande en matériau élastique à plusieurs couches selon la revendication 4, **caractérisée en ce que** les couches en non-tissé présentent un poids de 10 g/m² à 50 g/m².

6. Bande en matériau élastique à plusieurs couches selon la revendication 1, **caractérisée en ce qu'**on est en présence d'une combinaison de couches de non-tissé selon la revendication 2 et 4.

7. Bande en matériau élastique à plusieurs couches selon la revendication 1, **caractérisée en ce que** la feuille est réalisée à partir d'un polymère élastique.

8. Bande en matériau élastique à plusieurs couches selon la revendication 7, **caractérisée en ce que** la déformation durable du matériau après une sollicitation (Permanent Set) est inférieure à 20%.

9. Bande en matériau élastique à plusieurs couches selon la revendication 1, **caractérisée en ce que** la bande est respirante.

10. Bande en matériau élastique à plusieurs couches selon la revendication 1, **caractérisée en ce que** la bande n'est pas respirante.

11. Bande en matériau élastique à plusieurs couches selon la revendication 1, **caractérisée en ce que** les matériaux sont assemblés les uns avec les autres au moyen d'une unité à ultrasons.

12. Bande en matériau élastique à plusieurs couches selon la revendication 1, **caractérisée en ce que** les matériaux sont assemblés les uns avec les autres au moyen d'un adhésif, par exemple en colle thermofusible, par exemple par Hotmelt.

13. Bande en matériau élastique à plusieurs couches selon la revendication 1, **caractérisée en ce que** les non-tissés sont introduits dans le processus d'extrusion de la feuille élastique.
